# FASCICULE DE BREVET EUROPEEN

(11) **EP 2 984 314 B1**
(45) Date de publication et mention de la délivrance du brevet: **06.05.2020**
(21) Numéro de dépôt: 13721978.8
(22) Date de dépôt: 11.04.2013
(51) Int. Cl.: F01P 3/08, F16K 1/42, F16K 17/04, F16K 25/00, F16K 15/02

(54) **GICLEUR DE REFROIDISSEMENT POUR PISTON D'UN MOTEUR À COMBUSTION INTERNE**
SPRITZDÜSE FÜR DIE KOLBENKÜHLUNG EINER BRENNKRAFTMASCHINE
OIL JETTING NOZZLE FOR COOLING A PISTON OF AN INTERNAL COMBUSTION ENGINE

(43) Date de publication de la demande: 17.02.2016
(73) Titulaire: Bontaz Centre R&D, 74460 Marnaz (FR)
(72) Inventeur: CLEMENT, Denis, Philippe, F-74440 Mieussy (FR); PEROTTO, Stéphane, Pascal, F-74130 Ayse (FR)
(74) Mandataire: Brevalex
(86) Numéro de dépôt international: PCT/FR2013/050789
(87) Numéro de publication internationale: WO 2014/167190

(56) Documents cités:
- EP-A1- 2 549 159
- DE-A1-102007 039 109
- JP-A- H07 317 519
- US-A- 4 995 346
- US-A- 5 533 472
- US-A- 5 915 345
- US-A1- 2002 014 543
- US-A1- 2008 210 314

## Description

### DOMAINE TECHNIQUE ET ART ANTÉRIEUR

La présente invention se rapporte à un dispositif de commande de l'alimentation d'un système avec un fluide permettant d'optimiser la consommation de fluide, par exemple un dispositif de commande de l'alimentation de gicleurs de refroidissement des pistons d'un moteur à combustion interne avec de l'huile.

Les moteurs à combustion interne sont de plus en plus souvent équipés de gicleurs de refroidissement de pistons dont le rôle est d'envoyer de l'huile sous pression provenant du circuit de lubrification du moteur sous les pistons afin de les refroidir pour qu'ils ne perdent pas leurs propriétés mécaniques. Ces gicleurs de refroidissement sont de gros consommateurs d'huile dans le moteur. Cette huile sous pression est envoyée dans les gicleurs de refroidissement au moyen d'une pompe. De manière générale, on cherche à réduire l'énergie consommée, par exemple en réduisant l'énergie consommée par le fonctionnement de la pompe. Pour cela, on cherche à maîtriser au mieux la consommation d'huile et la pression d'huile.

Généralement les pompes mises en œuvre pour alimenter les gicleurs de refroidissement sont à capacité variable, ce qui permet de contrôler la pression d'huile du moteur.

Un gicleur de refroidissement fonctionne de la manière suivante, il est fermé lorsque la pression d'alimentation est inférieure à une valeur minimale, il ne délivre alors pas d'huile. Au-delà de cette valeur minimale, le gicleur délivre un débit donné d'huile à une pression donnée. Il est également demandé que celui-ci délivre un débit d'huile à un endroit précis du piston avec une vitesse de jet maximale. On cherche donc également à réduire les pertes de charge.

Un gicleur de refroidissement de l'état de la technique comporte un corps muni d'une extrémité reliée à une source d'huile sous pression et une autre extrémité formée par l'extrémité libre du gicleur envoyant le jet d'huile vers le fond du piston. Un clapet est interposé entre ces deux extrémités, le clapet comportant un siège de clapet et un obturateur, l'obturateur étant rappelé en contact avec le siège de clapet au moyen d'un ressort. Lorsque la pression d'huile au niveau de l'extrémité d'alimentation est supérieure à la valeur minimale fixée, l'obturateur s'écarte du siège de clapet autorisant l'écoulement de l'huile sous pression en direction de l'extrémité du gicleur orientée vers le fond du piston.

Lorsque le clapet est ouvert, après une phase transitoire dans laquelle le débit augmente rapidement, la variation de débit en sortie du gicleur en fonction de la pression d'huile d'alimentation est une fonction affine et est régulée par la section de passage de la sortie du gicleur.

Or, il est souhaitable de réaliser un gicleur qui délivre un débit qui ne varie pas de manière affine afin d'optimiser le refroidissement et la consommation de la pompe.

Le document US4995346 décrit un gicleur de refroidissement pour piston de moteur à combustion interne comportant un clapet comprenant un bille et un ressort et un canal pour le fluide dont le diamètre se réduit en direction de la sortie d'évacuation.

Le document JP H07 317519 décrit un dispositif de lubrification et de refroidissement pour un moteur à combustion interne. Le dispositif comporte un conduit de lubrification et un conduit de refroidissement alimentés via un clapet commandé par la pression et par un thermostat.

Le document EP 2 549 159 décrit un capteur anti-retour mis en œuvre dans les hyper-compresseurs pour la réalisation de polyéthylène

### EXPOSÉ DE L'INVENTION

C'est par conséquent le but de la présente invention d'offrir un gicleur de refroidissement pour piston d'un moteur à combustion interne permettant d'offrir une variation du débit de fluide délivré en fonction de la pression plus complexe que celle des gicleurs de refroidissement de l'état de la technique.

La présente invention a pour objet un gicleur de refroidissement tel qu'énoncé dans la revendication 1.

L'alésage peut comporter plusieurs deuxièmes portions, lesdites deuxièmes sections étant disposées dans le sens d'écoulement du fluide de sorte qu'elles délimitent avec l'obturateur des sections de passages croissantes dans le sens d'écoulement.

Dans un exemple de réalisation, la deuxième portion présente une section cylindrique.

Dans un autre exemple de réalisation, la au moins une deuxième portion délimite avec l'obturateur une section de passage variable.

### BRÈVE DESCRIPTION DES DESSINS

La présente invention sera mieux comprise à l'aide de la description qui va suivre et des dessins en annexe sur lesquels :
- la figure 1A est une vue en coupe d'un exemple de réalisation d'un gicleur de refroidissement selon la présente invention dans un état fermé,
- la figure 1B est une vue en coupe du gicleur de refroidissement de la figure 1A dans un premier état de régulation,
- la figure 1C est une vue de détail de la figure 1B,
- la figure 1D est une vue en coupe du gicleur de refroidissement de la figure 1A dans un deuxième état de régulation,
- la figure 2A est une vue en coupe d'un autre exemple de réalisation d'un gicleur de refroidissement selon la présente invention dans un état fermé,
- la figure 2B est une vue en coupe du gicleur de la figure 2A dans un premier état de régulation,
- la figure 2C est une vue de détail de la figure 2B,
- la figure 2D est une vue en coupe du gicleur de refroidissement de la figure 2A dans un deuxième état de régulation,
- la figure 3 est une représentation graphique de la variation de débit en l/min en sortie du gicleur de refroidissement des figures 2A à 2D en fonction de la pression en Bar,
- la figure 4 est une représentation graphique de la variation de débit en l/min en sortie du gicleur de refroidissement des figures 2A à 2D en fonction de la pression en bar, et de la variation des débits en fonction de la pression pour un gicleur de refroidissement de l'état de la technique, ainsi que celui d'un gicleur de refroidissement présentant une sortie ayant une section augmentée,
- la figure 5 est une vue en coupe d'une variante de réalisation d'un gicleur de refroidissement selon l'invention dans un état ouvert.

### EXPOSÉ DÉTAILLÉ DE MODES DE RÉALISATION PARTICULIERS

Nous utiliserons, à des fins de simplification, le terme « huile » pour désigner le fluide circulant à travers le dispositif, mais il sera compris que la présente invention ne se limite pas à l'alimentation d'huile mais que tout autre fluide peut circuler et voir son débit régulé.

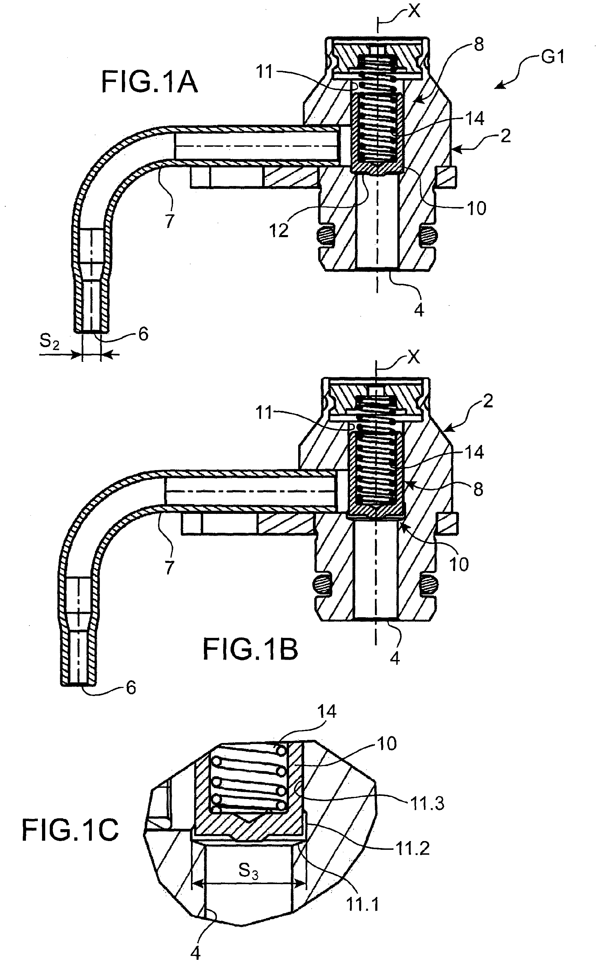

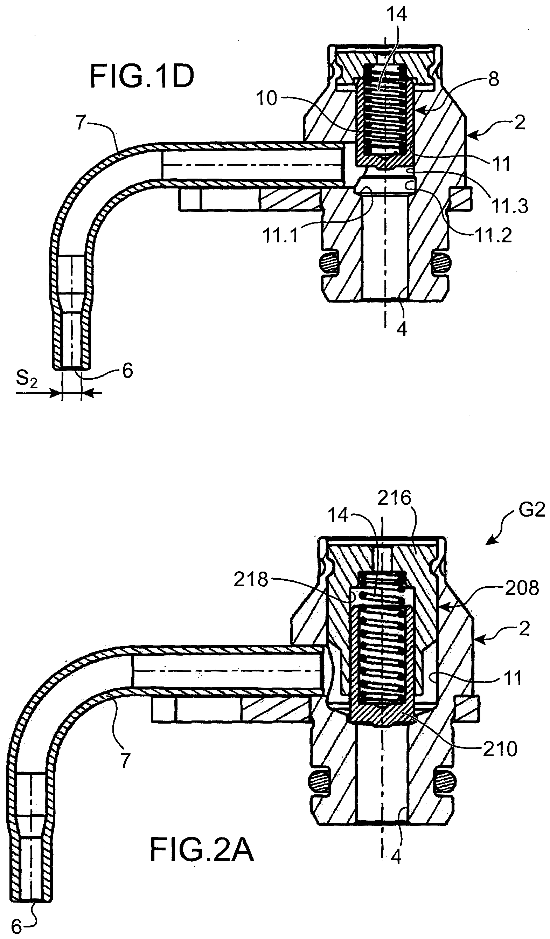

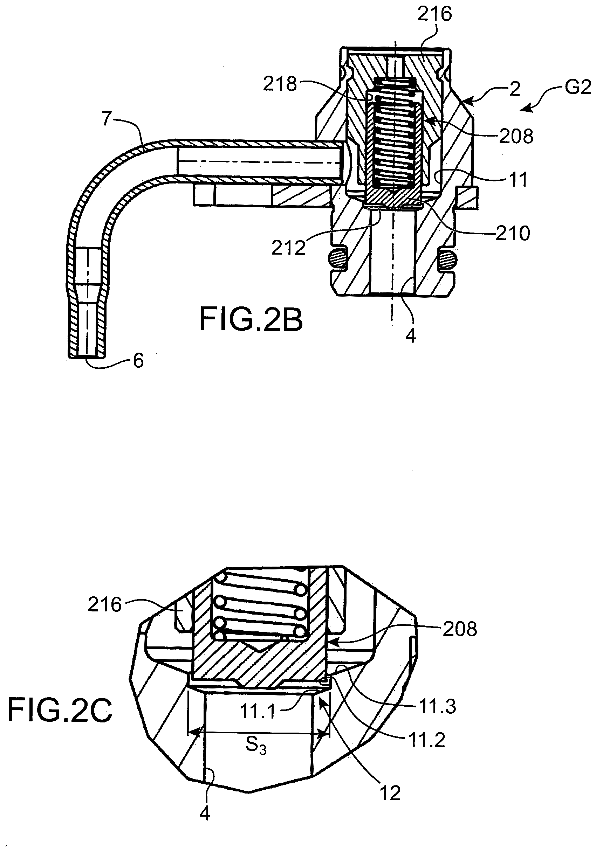

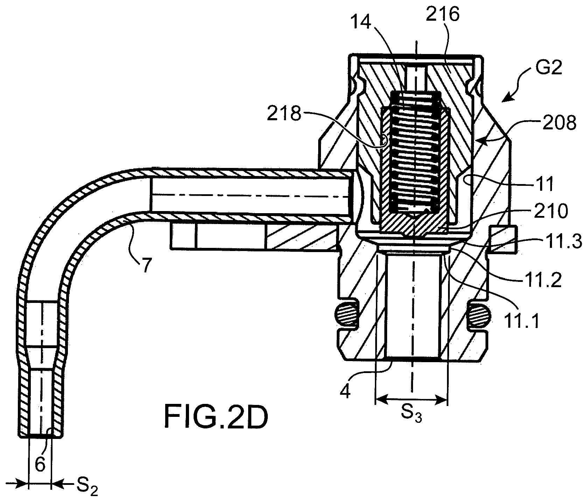

Les gicleurs représentés sur les figures 1A à 1D et sur les figures 2A à 2D sont destinés à être disposés entre une source de fluide sous pression, par exemple le circuit de lubrification du moteur, et le fond d'un piston d'un moteur à combustion interne. Le gicleur de refroidissement est destiné à projeter de l'huile contre le fond du piston (non représenté).

Le gicleur G1 des figures 1A à 1D comporte un corps 2 muni d'une première extrémité 4 destinée à être connectée à une source de fluide sous pression (non représentée) et une deuxième extrémité d'évacuation 6. Dans l'exemple représenté, l'extrémité d'évacuation est formée par l'extrémité libre d'un tube 7 de gicleur relié au corps 2.

L'extrémité libre du tube 6 présente une section de passage S2.

Le gicleur de refroidissement comporte également un clapet 8 comprenant un obturateur 10 monté mobile le long d'un axe X dans un alésage 11 du corps 2 et un siège de clapet 12 contre lequel l'obturateur 10 repose dans un état fermé du gicleur.

L'obturateur 10 est rappelé élastiquement en contact contre le siège de clapet 12 par un moyen élastique 14 formé, dans l'exemple représenté, par un ressort. Le ressort 14 est réglé de sorte que l'obturateur se soulève du siège de clapet 12 pour une valeur de pression donnée désignée P1 en dessous de laquelle le gicleur est fermé. La position de l'obturateur dans l'alésage 11 le long de l'axe X est fixée par le niveau de pression de l'huile d'alimentation.

Comme on peut le voir représenté sur la figure 1C, l'alésage 11 présente un profil tel que, au delà de la phase d'ouverture du clapet, il délimite deux sections de passage du fluide en direction de la sortie d'évacuation en fonction de la position longitudinale de l'obturateur dans l'alésage 11.

Dans l'exemple représenté sur la figure 1C, dans le sens d'écoulement de l'huile, l'alésage comporte une première portion 11.1 de forme tronconique formant le siège de clapet 12, une deuxième portion 11.2 de forme cylindrique à section circulaire, et une troisième portion de forme tronconique 11.3 de sorte que la section de l'alésage augmente dans le sens d'écoulement de l'huile.

Dans la position représentée sur la figure 1C, la section de passage du fluide entre l'obturateur 10 et l'alésage est délimitée par la portion cylindrique 11.2, cette section de passage sera désignée S3.

Dans la position représentée sur la figure 1D, dans laquelle l'obturateur est écarté suffisamment du siège de clapet 12, la section de passage entre l'alésage l'obturateur 10 n'est plus déterminée par la portion cylindrique mais par la troisième portion 11.3 et l'obturateur 10. Cette section est supérieure à la section S2 au niveau de la sortie d'évacuation du tube et n'est plus la section limitante. C'est la section S2 qui est alors la section limitante.

Par conséquent, lorsque la pression d'huile en entrée est suffisante pour que l'obturateur soit écarté du siège de clapet, le clapet présente au moins deux états d'ouverture lors desquels le débit d'huile est régulé différemment. Au delà de la phase de décollement lors de laquelle le débit varie rapidement, le clapet connaît un état d'ouverture avec une section S3. Cet état dure tant que l'obturateur délimite avec la deuxième portion 11.2 cylindrique la section S3. Il est à noter que lorsque la pression augmente l'obturateur se déplace le long de l'axe X en éloignement du siège de clapet mais, malgré ce déplacement, il délimite pour une gamme de pression donnée la section S3 avec l'alésage tant que son extrémité inférieure est au droit de la deuxième portion cylindrique 11.2.

S3 étant inférieure à S2, le débit est régulé par la section S3.

Lorsque la pression augmente suffisamment pour que l'obturateur 10 se déplace longitudinalement de sorte que la section de passage est définie entre l'obturateur 10 et la portion tronconique 11.3, qui est supérieure à S2, le débit est régulé par la section S2 de sortie du gicleur.

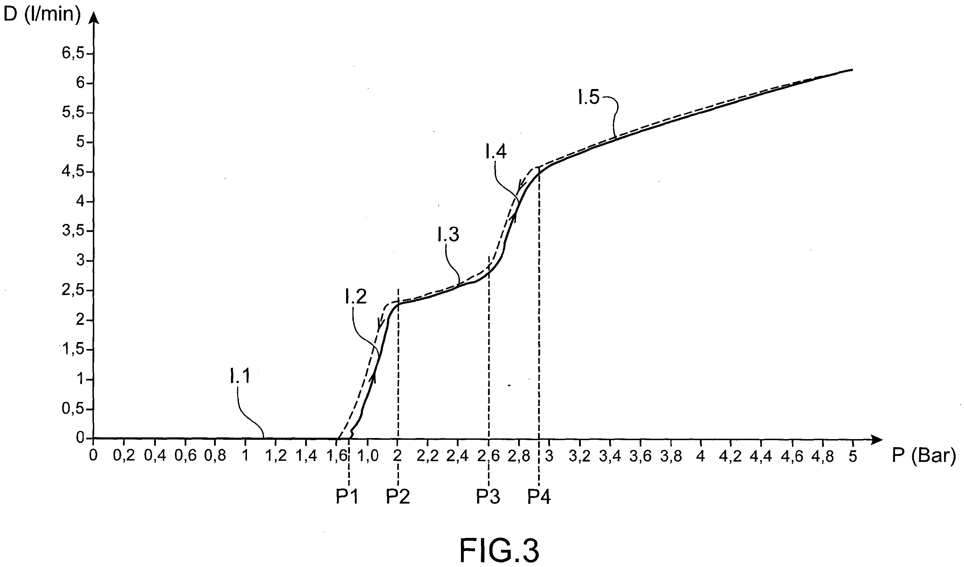

Le fonctionnement du gicleur de refroidissement des figures 1A à 1D va maintenant être décrit en relation avec la figure 3 représentant la variation de débit D en l/min en fonction de la pression P en Bar.

Lorsque la pression d'alimentation en huile est inférieure à la pression P1, le gicleur de refroidissement est fermé, l'obturateur 10 est maintenu en appui contre le siège de clapet 12 interrompant l'écoulement entre l'entrée d'alimentation 4 et la sortie d'évacuation 6 (portion I.1 de la courbe de la figure 3).

Lorsque la pression d'huile dépasse la valeur P2, au-delà de la phase de décollement de l'obturateur (portion I.3 de la courbe de la figure 3), mais est inférieure à une valeur P3, l'obturateur 10 est suffisamment écarté du siège de clapet 12 pour qu'il soit en regard de la portion cylindrique 11.2, définissant avec la portion cylindrique 11.2 la section limitante S3. Le débit en sortie du tube du gicleur est alors commandé par cette section limitante S3. La variation de débit suit une première fonction affine (portion I.3 de la courbe de la figure 3).

Lorsque la pression d'huile dépasse une valeur P4, (portion I.5 de la courbe de la figure 3), l'obturateur s'écarte davantage du siège de clapet le long de l'axe longitudinal X de sorte qu'il n'est plus au droit de la portion cylindrique 11.2, la section de passage limitante est alors formée par la section S2 de sortie du tube du gicleur. Le débit d'huile en sortie du gicleur est alors commandé par la section S2.

La portion I.4 entre les portions I.3 et I.5 entre les pressions P3 et P4 correspond à une phase transitoire lors du changement de section de passage de S3 à une section supérieure à S2.

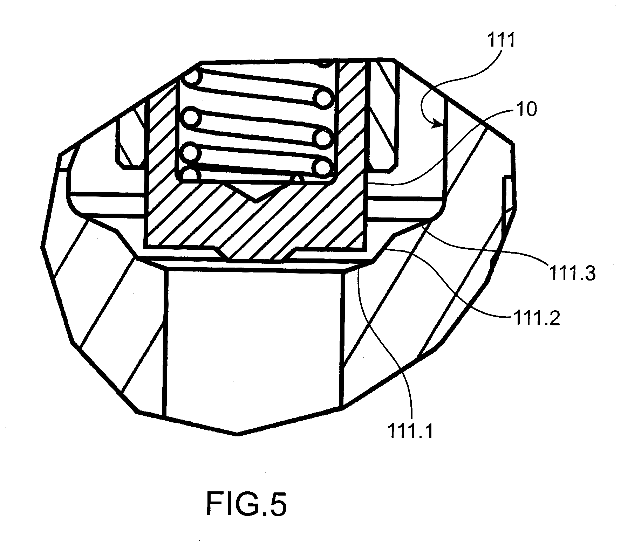

Le profil de l'alésage, plus particulièrement visible sur la figure 1C n'est pas limitatif. Sur la figure 5, on peut voir un autre exemple de réalisation d'un siège de clapet permettant la création d'une section limitante variable. Dans cet exemple de réalisation, l'alésage 111 comporte une première portion tronconique 111.1 destinée à coopérer avec l'obturateur afin de fermer le gicleur et une deuxième portion tronconique 111.2 destinée à délimiter avec l'obturateur une section limitante de valeur variable et continûment croissante avec la pression d'huile, et une troisième portion tronconique 111.3 délimitant une section de passage avec l'obturateur 10 supérieure à la section S2.

On pourrait également envisager que l'alésage comporte plusieurs sections cylindriques 11.2 de diamètre croissant et/ou tronconique d'angle au sommet croissant dans le sens d'écoulement de l'huile de sorte que le siège de clapet avec l'obturateur définissent plusieurs sections limitantes croissantes avec la pression d'huile.

Le siège de clapet pourrait présenter une forme autre qu'une forme tronconique, par exemple il pourrait être formé par un épaulement.

Sur les figures 2A à 2D, on peut voir la présente invention appliquée à un autre exemple de gicleur G2 selon l'invention. Cet exemple diffère de celui des figures 1A à 1D dans le montage du clapet. Ce montage est décrit dans le brevet FR 2 913 723 du déposant. Dans cet exemple, l'alésage 11 présente le même profil que le gicleur G1. Les mêmes références sont reprises pour désigner les mêmes éléments.

Le gicleur comporte une chemise tubulaire 216 munie d'un passage traversant 218 monté dans l'alésage 11 du corps du gicleur. L'obturateur 210 est monté coulissant dans le passage traversant 218. Un ressort 14 est monté dans le passage traversant 218 de sorte à repousser l'obturateur contre le siège de clapet 212. Le siège de clapet 212 est formé dans le corps du gicleur.

Ce gicleur présente l'avantage d'avoir une structure qui évite les phénomènes de vibrations et d'usure en fonctionnement, présente un encombrement réduit dans le cylindre moteur, et comprend un plus faible nombre de pièces qui sont elles-mêmes plus simples à réaliser, évitant les opérations d'usinage précis telles que la rectification.

Le fonctionnement du gicleur des figures 2A à 2D est similaire à celui du gicleur des figures 1A à 1D et ne sera pas décrit.

Il est à noter que la valeur de la pression P3 au-delà de laquelle le débit est régulé par la section S2 peut être aisément fixée en fonction de la longueur par exemple de la portion cylindrique 12.2. En effet, plus cette portion présente une dimension le long de l'axe X important, plus la pression requise pour que l'obturateur ne soit plus au droit de celle-ci est importante. Ainsi, en déterminant la longueur de cette portion, il est possible de déterminer la pression P3.

Comme indiqué ci-dessus, la description porte plus particulièrement sur un gicleur de refroidissement intégrant des moyens de commande de l'alimentation en huile sous pression, mais il sera compris que le dispositif de commande pourrait être disposé en amont d'un gicleur ou d'une pluralité de gicleurs et commander l'alimentation d'un gicleur ou d'une pluralité de gicleurs simultanément.

En outre, il sera compris que ce dispositif peut être utilisé dans toute installation requérant une commande de son débit en fluide en fonction de la pression d'alimentation.

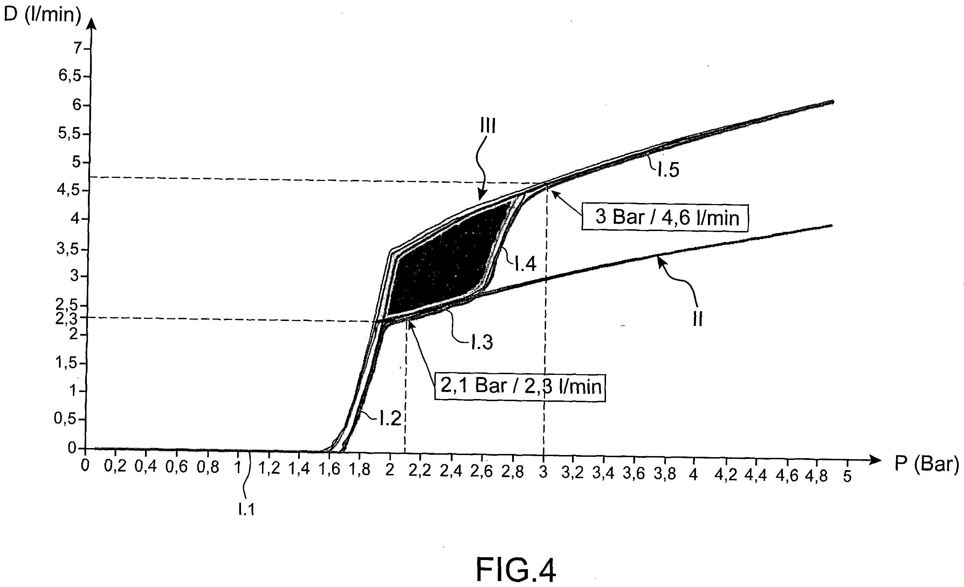

Sur la figure 4 on peut voir représenté la variation du débit d'huile en litre/min. en fonction de la pression d'alimentation en huile en Bar pour le gicleur de refroidissement représenté sur les figures 1A à 1D, la courbe étant désignée par I, et pour deux gicleurs de refroidissement de l'état de la technique représentant des sections de sortie d'évacuation égale à S3 et S2 respectivement. L'huile utilisée a une viscosité de 7 cSt.

Dans l'exemple particulier représente, il est souhaité réaliser un gicleur qui conserve un débit de 2,3 l/min à 2,1 Bar comme le gicleur dont le débit est représenté par la courbe I, mais qui offre un débit de 4,6 l/min à 3 Bar, alors que le débit de la courbe I à 3 Bar est égal à 3 l/min.

Sur la courbe II, on peut voir que la variation de débit, au-delà de la phase décollement, suit une fonction affine. Le gicleur délivre un débit de 2,3 l/min à 2,1 Bar et un débit à 3 Bar égal à 3 l/min.

La courbe I comporte une portion désignée I.1 pour une pression inférieure à 1,5 Bar, correspondant à l'état fermé du clapet, le débit en sortie est donc nul.

Ensuite, la courbe I comporte une portion désignée I.2 lorsque la pression est supérieure à 1,5Bar, l'obturateur se décolle du siège de clapet, le débit augmente alors rapidement.

Lorsque la phase de décollement est terminée, le clapet présente un état d'ouverture lors duquel l'obturateur définit avec le siège de clapet la section de passage S3 qui est limitante. La variation de débit suit une loi affine (portion désignée I.3). On obtient effectivement un débit de 2,3 l/min à 2,1 Bar.

Lorsque la pression d'alimentation augmente encore, la courbe II comporte une portion I.5 correspondant à un autre état d'ouverture du clapet lors duquel l'obturateur se déplace longitudinalement par rapport au siège de clapet de sorte que la section de passage est telle que c'est la section S2 qui régule le débit.

La courbe présente une portion I.4 ente la portion I.3 et la portion I.5, qui correspond à une phase transitoire du fait du changement de la section de passage.

Grâce à l'invention, on obtient effectivement un débit de 4,6 l/min pour une pression d'alimentation de 3 Bar sans influencer le débit à une pression de 2,1 Bar.

Sur la courbe III, le gicleur de l'état de la technique a une section de sortie égale à S2, on obtient effectivement 4,6 l/min à 3 Bar mais un débit de 3,5 l/min à 2,1 Bar.

La zone hachurée représente la consommation d'huile économisée grâce à l'invention par rapport à un gicleur de l'état de la technique ayant avec une section de sortie S2 (courbe III)

Grâce à l'invention il est possible de réaliser un gicleur de refroidissement ayant une loi de variation du débit d'huile relativement complexe, permettant d'offrir des débits d'huile élevées pour des valeurs de pression données tout en optimisant la consommation d'huile et de la pompe.

## Revendications

1. Gicleur de refroidissement pour piston d'un moteur à combustion interne comportant un corps et au moins un tube de gicleur (7), ledit corps étant muni d'une entrée d'alimentation (4) destinée à être connectée à une source de fluide sous pression, une sortie d'évacuation (6) du fluide sous pression formée par une extrémité libre du tube de gicleur (7), un alésage (11, 111) entre l'entrée d'alimentation (4) et la sortie d'évacuation (6), ladite sortie d'évacuation présentant une section de passage donnée (S2), un clapet (8, 108) comportant un obturateur cylindrique (10, 210) monté mobile en translation dans ledit alésage (11, 111) et venant en appui contre un siège de clapet (12, 212) ménagé dans l'alésage (11, 111) dans un état fermé, dans lequel l'alésage (11, 111) comporte une première portion (11.1, 111.1) formant le siège de clapet (12, 212), **caractérisé en ce que** l'alésage comporte au moins une deuxième portion (11.2, 111.2) délimitant avec l'obturateur, pour chaque position de l'extrémité inférieure de l'obturateur au droit de la deuxième portion, une section de passage annulaire (S3) inférieure à la section de passage de la sortie d'évacuation (6) et une troisième portion tronconique (11.3, 111.3) délimitant avec l'obturateur, au moins à partir d'une certaine position de l'extrémité inférieure de l'obturateur au droit de la troisième portion, une section de passage annulaire supérieure à la section de passage de la sortie d'évacuation (6), lesdites première, deuxième et troisième portions étant disposées dans cet ordre dans le sens d'écoulement du fluide.

2. Gicleur de refroidissement selon la revendication 1, dans lequel l'alésage comporte plusieurs deuxièmes portions, lesdites deuxièmes portions étant disposées dans le sens d'écoulement du fluide de sorte qu'elles délimitent avec l'obturateur des sections de passages croissantes dans le sens d'écoulement.

3. Gicleur de refroidissement selon la revendication 1 ou 2, dans lequel la deuxième portion (11.2) présente une portion cylindrique.

4. Gicleur de refroidissement selon la revendication 1 ou 2, dans lequel la au moins une deuxième portion (111.2) délimite avec l'obturateur (10) une section de passage variable.

## Patentansprüche

1. Spritzdüse für die Kolbenkühlung einer Brennkraftmaschine, die einen Körper und mindestens ein Spritzdüsenrohr (7) umfasst, wobei der Körper mit Folgendem versehen ist: einem Zulauf (4), der dazu bestimmt ist, mit einer Druckflüssigkeitsquelle verbunden zu sein, einem Ablauf (6) für die Druckflüssigkeit, der durch ein freies Ende des Spritzdüsenrohrs (7) gebildet ist, einer Bohrung (11, 111) zwischen dem Zulauf (4) und dem Ablauf (6), wobei der Ablauf einen gegebenen Durchgangsquerschnitt (S2) aufweist, einem Ventil (8, 108), das einen zylindrischen Schieber (10, 210) umfasst, der in der Bohrung (11, 111) verschiebbar montiert ist und in einem geschlossenen Zustand gegen einen in der Bohrung (11, 111) angebrachten Ventilsitz (12, 212) stößt, wobei die Bohrung (11, 111) einen ersten Abschnitt (11.1, 111.1) umfasst, der den Ventilsitz (12, 212) bildet, **dadurch gekennzeichnet, dass** die Bohrung mindestens einen zweiten Abschnitt (11.2, 111.2), der zusammen mit dem Schieber für jede Position des unteren Endes des Schiebers im Bereich des zweiten Abschnitts einen ringförmigen Durchgangsquerschnitt (S3), der kleiner als der Durchgangsquerschnitt des Ablaufs (6) ist, abgrenzt, und einen dritten, kegelstumpfförmigen Abschnitt (11.3, 111.3), der zusammen mit dem Schieber mindestens ab einer gewissen Position des unteren Endes des Schiebers im Bereich des dritten Abschnitts einen ringförmigen Durchgangsquerschnitt, der größer als der Durchgangsquerschnitt des Ablaufs (6) ist, abgrenzt, umfasst, wobei der erste, der zweite und der dritte Abschnitt in dieser Reihenfolge in der Strömungsrichtung der Flüssigkeit angeordnet sind.

2. Spritzdüse für die Kühlung nach Anspruch 1, wobei die Bohrung mehrere zweite Abschnitte umfasst, wobei die zweiten Abschnitte so in der Strömungsrichtung der Flüssigkeit angeordnet sind, dass sie zusammen mit dem Schieber in der Strömungsrichtung größer werdende Durchgangsquerschnitte abgrenzen.

3. Spritzdüse für die Kühlung nach Anspruch 1 oder 2, wobei der zweite Abschnitt (11.2) einen zylindrischen Abschnitt aufweist.

4. Spritzdüse für die Kühlung nach Anspruch 1 oder 2, wobei der mindestens eine zweite Abschnitt (111.2) zusammen mit dem Schieber (10) einen variablen Durchgangsquerschnitt abgrenzt.

## Claims

1. Cooling spray jet for a piston of an internal combustion engine comprising a body and at least one spray jet tube (7), said body having a supply inlet (4) intended for being connected to a fluid under pressure source, a discharge outlet (6) for the fluid under pressure made by a free end of the of the spray jet tube (7), a reaming (11, 111) between the supply inlet (4) and the discharge outlet (6), said discharge outlet having a given cross-sectional area (S2), a valve (8, 108) comprising a plug (10, 210) installed free to move in translation in said reaming (11, 111) and bearing in contact with a valve seat (12, 212) formed in the reaming (11, 111) in a closed state, in which said reaming comprising a first portion (11.1, 111.1) forming the valve seat (12, 212), **characterized in that** said reaming comprises at least one second portion (11.2, 111.2) that together with the plug delimits, when it faces the second portion, an annular cross-sectional area (S3) smaller than the cross-sectional area of the discharge outlet (6) and a third tapered portion (11.32, 111.3) that together with the plug delimits, at least from a certain position of the lower end of the plug when it faces the third portion, an annular cross-sectional area larger than the cross-sectional area of the discharge outlet (6), said first, second and third portions being arranged in this order along the direction of fluid flow.

2. Cooling spray jet according to claim 1, in which the reaming comprises several second portions, said second portions being arranged along the direction of fluid flow such that together with the plug they delimit increasing cross-sectional areas along the flow direction.

3. Cooling spray jet according claim 1 or 2, in which the second portion (11.2) has a cylindrical portion.

4. Cooling spray jet according claim 1 or 2, in which the at least one second portion (111.2) together with the plug (10) delimits a variable cross-sectional area.
